# FASCICULE DE BREVET EUROPEEN

(11) **EP 4 602 677 B1**
(45) Date de publication et mention de la délivrance du brevet: **18.02.2026**
(21) Numéro de dépôt: 24817436.9
(22) Date de dépôt: 20.11.2024
(51) Int. Cl.: H01M 50/545, H01M 50/559, H01M 50/566, H01M 50/536, H01M 50/538, H01M 50/107, H01M 50/119, H01M 50/533, H01M 50/534, H01M 10/04, H01M 10/0587

(54) **CELLULE ÉLECTRIQUE ET SON PROCÉDÉ DE FABRICATION**
ELEKTRISCHE ZELLE UND VERFAHREN ZU IHRER HERSTELLUNG
ELECTRIC CELL AND METHOD FOR MANUFACTURING SAME

(30) Priorité: 20.11.2023 FR 2312753
(43) Date de publication de la demande: 20.08.2025
(73) Titulaire: Verkor, 38000 Grenoble (FR)
(72) Inventeur: ACOSTA LAISEQUILLA, Rafael, 38000 Grenoble (FR)
(74) Mandataire: Novagraaf Group
(86) Numéro de dépôt international: PCT/IB2024/061597
(87) Numéro de publication internationale: WO 2025/109480

(56) Documents cités:
- CN-A- 113 937 429
- CN-U- 219 759 894
- DE-A1- 102021 119 259
- US-A1- 2023 291 080

## Description

La présente invention a trait au domaine technique des cellules cylindriques des batteries électriques et à leurs procédés de fabrication.

Les cellules cylindriques sont fabriquées par enroulement autour d'un mandrin, d'un empilement successif d'au moins :
- une feuille d'électrode positive ou cathode ;
- une feuille de séparateur isolant ;
- une feuille d'électrode négative ou anode ;
- une feuille de séparateur isolant.

Des languettes de collecte de courant dépourvues (non revêtues ou non recouvertes) de matériau actif sont prévues le long des feuilles d'électrode positive et négative dans la direction de l'axe longitudinal de la cellule cylindrique. Ces languettes de collecte de courant permettent de collecter et d'acheminer le courant électrique. Ces languettes de collecte de courant sont pliées, rabattues ou tassés dans des plans perpendiculaires à l'axe longitudinal de la cellule cylindrique de part et d'autre de celle-ci. Un premier collecteur de courant et un deuxième collecteur de courant sont, respectivement, raccordés électriquement à l'anode et à la cathode par soudure aux languettes de collecte de courant. Le collecteur de courant de l'anode et le collecteur de courant de la cathode se présentent sous la forme de deux disques pleins ou ajourés destinés à former ou à être reliés aux bornes de sortie (aussi appelées pôles) de la batterie électrique.

L'empilement cylindrique est logé dans un boîtier cylindrique (ou « casing » en anglais) après quoi un électrolyte est injecté dans ledit boîtier cylindrique. Ce boîtier se présente sous la forme d'une enceinte cylindrique creuse.

Une fois l'empilement cylindrique logé dans le boîtier, le collecteur de courant est solidarisé au boitier. La solidarisation est effectuée depuis une face extérieure du boitier par soudage ou par emboutissage à l'aveugle.

Ainsi le collecteur de courant de l'anode est solidarisé au boîtier de façon hasardeuse car la soudure et/ou l'emboutissage est réalisé à l'aveugle ainsi que précédemment évoqué. Il peut en résulter de sérieuses conséquences quant à la stabilité et la qualité du contact électrique du collecteur de courant, notamment celui de l'anode. En outre, un défaut de fixation, au fond du boîtier, du collecteur de courant de l'anode peut grever les performances de la cellule cylindrique voire être à l'origine d'accidents gravissimes en cours d'utilisation et ceci en raison d'un mouvement non souhaité du collecteur de courant. Le document CN113937429A décrit un procédé et un dispositif de connexion du collecteur de courant négatif à la paroi interne de l'enveloppe cylindrique du boîtier d'une cellule électrique.

Un objet de la présente invention est faciliter la réalisation d'un raccordement électrique stable et sûr entre le collecteur de courant de l'anode (ou, de manière équivalente, de la cathode) et le boîtier logeant la cellule cylindrique.

Un autre objet de la présente invention est d'améliorer la fixation du collecteur de courant.

Un autre objet de la présente invention est d'obtenir des cellules plus fiables.

A cet effet, il est proposé, en premier lieu, une cellule électrique comprenant
- un empilement cylindrique comportant successivement une première feuille d'électrode, un premier séparateur, une deuxième feuille d'électrode de polarité opposée à la première feuille d'électrode et un deuxième séparateur ;
- un boîtier comportant une enveloppe cylindrique métallique ayant une face interne délimitant un logement dans lequel loge l'empilement cylindrique ;
- un collecteur de courant connecté à la première ou à la deuxième feuille d'électrode;

le collecteur de courant comprenant sur sa périphérie un rebord comportant
une face latérale extérieure destinée à venir en contact avec la face interne de l'enveloppe cylindrique lorsque l'empilement cylindrique est logée dans le boîtier;
une face latérale intérieure opposée à la face latérale extérieure;
une tranche reliant la face latérale extérieure et la face latérale intérieure,
la cellule comprenant un cordon de soudure apposé sur la tranche et sur la face interne de l'enveloppe cylindrique pour souder le collecteur de courant à ladite face interne de l'enveloppe cylindrique, une hauteur totale comprenant l'épaisseur du collecteur de courant et la hauteur du rebord, mesurée selon un axe longitudinal de l'enveloppe cylindrique étant au minimum égale à deux fois et demie l'épaisseur du collecteur de courant.

Diverses caractéristiques supplémentaires peuvent être prévues, seules ou en combinaison :
- la tranche du rebord est sensiblement plane et s'étend sensiblement perpendiculairement à l'axe longitudinal de l'enveloppe cylindrique du boîtier ;
- le collecteur de courant présente une épaisseur comprise entre 0.1 millimètre et 0.6 millimètre ;
- l'épaisseur du collecteur de courant est sensiblement égale à 0.35 millimètre ;
- l'épaisseur du collecteur de courant est sensiblement homogène sur toute sa surface ;
- le rebord est présent sur au moins deux parties diamétralement opposées de la périphérie du collecteur de courant ;
- le collecteur de courant présente, avant qu'il ne vienne en contact avec la face interne de l'enveloppe cylindrique, un diamètre initial supérieur au diamètre intérieur de l'enveloppe cylindrique, ce collecteur de courant se pliant, lorsqu'il vient en contact avec l'enveloppe cylindrique, en sa périphérie sous l'effet de ce contact de sorte à former le rebord ;
- le collecteur de courant comprend du cuivre ;
- le collecteur de courant comprend du nickel.

Il est proposé, en deuxième lieu, un procédé de fabrication de la cellule électrique présentée ci-dessus comprenant les étapes suivantes:
- disposition de l'empilement cylindrique dans le boîtier de sorte que la face latérale extérieure du rebord vient en contact avec la face interne de l'enveloppe cylindrique;
- application d'un cordon de soudure sur la tranche du rebord de sorte à souder le collecteur de courant à la face interne de l'enveloppe cylindrique.

Diverses caractéristiques supplémentaires peuvent être prévues, seules ou en combinaison :
- le procédé présenté ci-dessus comprend, en outre, une étape d'insertion du collecteur de courant dans l'enveloppe cylindrique de sorte que ce collecteur de courant se plie, lorsqu'il vient en contact avec l'enveloppe cylindrique, en sa périphérie sous l'effet de ce contact pour former le rebord, ce collecteur de courant présentant, avant qu'il ne vienne en contact avec la face interne de l'enveloppe cylindrique, un diamètre initial supérieur au diamètre intérieur de l'enveloppe cylindrique ;
- le procédé présenté ci-dessus comprend, en outre, une étape de pré-pliage de la périphérie du collecteur (4) de courant avec un angle compris entre 20 et 75 degrés, cette étape de pré-pliage étant préalable à l'étape d'insertion ;
- l'angle est sensiblement égal à 60 degrés.

D'autres caractéristiques et avantages de l'invention apparaîtront plus clairement et de manière concrète à la lecture de la description ci-après de modes de réalisation, laquelle est faite en référence aux dessins annexés dans lesquels :
la figure 1 illustre schématiquement le raccordement d'un collecteur de courant d'une anode d'une cellule cylindrique au boîtier d'une batterie électrique selon divers modes de réalisation;
la figure 2 illustre schématiquement des étapes d'un procédé de fabrication de la batterie électrique précitée selon divers modes de réalisation.

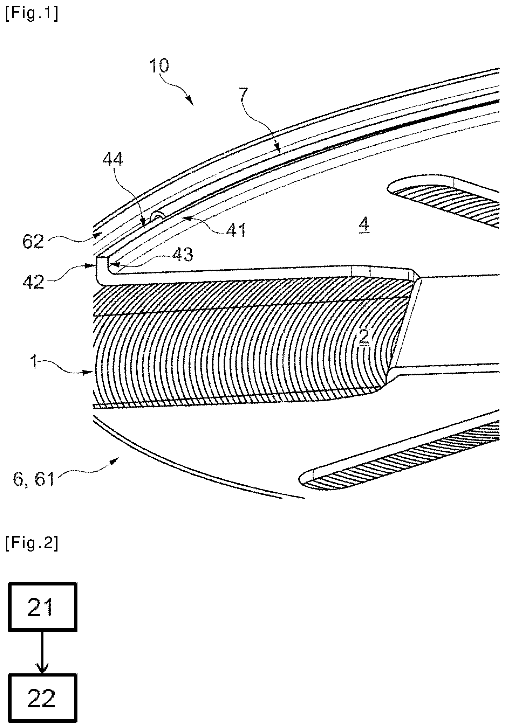

En se référant à la figure 1, il est affiché une cellule **10** électrique comprenant
- un empilement **1** cylindrique ou, plus généralement, sensiblement cylindrique comportant successivement une première feuille **2** d'électrode (par exemple, une anode), un premier séparateur, une deuxième feuille d'électrode de polarité opposée à la première feuille **2** d'électrode et un deuxième séparateur;
- un boîtier **6** apte à contenir l'empilement **1** cylindrique. ;
- un collecteur **4** de courant connecté à la première feuille **2** d'électrode ou à la deuxième feuille d'électrode. Au moins une partie du collecteur **4** de courant est, dans un mode de réalisation, destinée à former une borne de sortie (ou pôle) de la cellule **10** électrique.

Le boîtier **6** comporte une enveloppe **61** cylindrique (ou, plus généralement, sensiblement cylindrique) métallique. L'enveloppe **61** cylindrique a une face **62** interne délimitant un logement dans lequel loge l'empilement 1 cylindrique.

Le collecteur **4** de courant est destiné à être soudé à la face **62** interne de l'enveloppe **61** cylindrique. La face **62** interne de l'enveloppe **61** cylindrique est donc agencée pour être en contact électrique avec le collecteur **4** de courant lui-même soudé ou connecté électriquement aux languettes de collecte de courant de la première feuille **2** d'électrode ou de la deuxième feuille d'électrode. Pour une meilleure conductivité électrique, le collecteur **4** de courant comprend du cuivre et/ou du nickel.

Pour cela, le collecteur **4** de courant comprend, sur sa périphérie, un rebord **41** (ou présente périphériquement un rebord **41).** Ce rebord **41** est un bord relevé/replié ou une partie formant saillie limitant au moins partiellement le collecteur **4** de courant (c.à.d. sur au moins une partie de la périphérie du collecteur **4** de courant).

Le rebord **41** comporte
- une face **42** latérale extérieure destinée à venir en contact avec la face **62** interne de l'enveloppe **61** cylindrique lorsque l'empilement **1** cylindrique est logé dans le boîtier **6;**
- une face **43** latérale intérieure opposée à la face **42** latérale extérieure;
- une tranche **44** reliant la face **42** latérale extérieure à la face **43** latérale intérieure destinée à recevoir un cordon **7** de soudure pour souder le collecteur **4** de courant à la face **62** interne de l'enveloppe **61** cylindrique.

La cellule **10** électrique comprend, en effet, un cordon **7** de soudure apposé sur la tranche **44** et sur la face **62** interne de l'enveloppe **61** cylindrique pour souder le collecteur **4** de courant à la face **62** interne de l'enveloppe **61** cylindrique. Dans ce raccordement, la tanche **44** du rebord **41** sert, avantageusement, de matelas permettant de réaliser une soudure (notamment, au laser) simple et sûre (non-hasardeuse) du collecteur **4** de courant à l'enveloppe **6** cylindrique.

L'épaisseur du collecteur **4** de courant ou, de manière équivalente, de la tranche **44** est, dans un mode de réalisation, comprise entre 0,1 millimètre et 0,6 millimètre, de manière plus préférée entre 0,2 millimètre et 0,5 millimètre ou de manière encore plus préférée sensiblement égale à 0,35 millimètre. L'épaisseur du collecteur **4** de courant est, de préférence, sensiblement homogène sur toute sa surface. Il s'ensuit que l'épaisseur de la tranche **44** est sensiblement homogène sur toute sa longueur. L'épaisseur de la tranche **44** du rebord **41** offre, en effet, une surface de soudage permettant d'apposer de manière sûre un cordon **7** de soudure pour souder le collecteur **4** de courant à la face **62** interne de l'enveloppe **61** cylindrique. Il en résulte un renforcement de la liaison mécanique et électrique entre le collecteur **4** de courant et le boîtier **6.**

Le rebord **41** vient, avantageusement, garantir la liaison mécanique et électrique entre le collecteur **4** de courant et le boîtier **6** au regard d'éventuelles dilatations thermiques provoquées par le chauffage des éléments impliqués dans cette liaison sous l'effet de fort courants électriques. Pour cela, la hauteur du rebord **41** mesurée selon l'axe longitudinal de l'enveloppe (61) cylindrique est, dans un mode de réalisation, au minimum égale à une fois et demie l'épaisseur du collecteur **4** de courant. Autrement dit, une hauteur totale comprenant l'épaisseur du collecteur **4** de courant et la hauteur du rebord **41,** mesurée selon l'axe longitudinal de l'enveloppe **61** cylindrique, est au minimum égale à deux fois et demie l'épaisseur du collecteur **4** de courant. La hauteur du rebord **41,** mesurée selon l'axe longitudinal de l'enveloppe **61** cylindrique, correspond sensiblement à la hauteur de la face **43** latérale intérieure mesurée selon ce même axe longitudinal de l'enveloppe **61** cylindrique. De telles dimensions assurent à la fois une facilité de soudure et une liaison souple et solide entre le collecteur **4** de courant et la face **62** interne de l'enveloppe **61** cylindrique du boitier **6.**

Dans un mode de réalisation, la tranche **44** du rebord **41** est sensiblement plane et s'étend sensiblement perpendiculairement à un axe longitudinal de l'enveloppe **61** cylindrique du boîtier **6.** Une telle disposition facilite davantage l'application d'une manière sûre le cordon **7** de soudure. L'angle formé par la tranche **44** et la face **62** interne peut servir de guide pour l'application d'un cordon **7** de soudure, notamment, laser.

Dans un autre mode de réalisation, le rebord **41** est présent sur au moins deux parties diamétralement opposées (ou des parties deux à deux diamétralement opposées) de la périphérie du collecteur **4** de courant. Cette répartition du rebord **41** améliore, avantageusement, la stabilité de la fixation par soudure du collecteur **4** de courant à l'enveloppe **61** cylindrique, tout en optimisant la longueur requise du cordon **7** de soudure. Le collecteur **4** de courant est, dans un mode de réalisation, un clinquant sous la forme d'un disque métallique (notamment, en cuivre ou en cuivre nickelé) ajouré ayant un rebord **41** sur sa périphérie extérieure.

Dans un mode de réalisation, le collecteur **4** de courant, présente, avant qu'il ne vienne en contact avec la face **62** interne de l'enveloppe **61** cylindrique, un diamètre initial supérieur au diamètre intérieur de l'enveloppe **61** cylindrique. Ce collecteur **4** de courant peut, en effet, être inséré dans l'enveloppe **61** cylindrique de sorte à former, lors de cette insertion, le rebord **41** en sa périphérie. Autrement dit, le rebord **41** peut être formé par emboutissage du collecteur **4** de courant dans l'enveloppe **61** cylindrique. Lorsque le collecteur **4** de courant vient en contact avec l'enveloppe **61** cylindrique, il se plie en sa périphérie sous l'effet de ce contact de sorte à former le rebord **41.**

En se reportant à la figure 2, un procédé de fabrication de la cellule **10** électrique décrite ci-dessus comprend une étape **21** de disposition (ou de logement) de l'empilement **1** cylindrique dans le boîtier **6** de sorte que la face **42** latérale extérieure du rebord **41** vient en contact avec la face **62** interne de l'enveloppe **61** cylindrique. Le collecteur **4** de courant est disposé de façon concentrique avec l'enveloppe **61** cylindrique de sorte que la surface **42** extérieure du rebord **41** vient en contact intime avec la face **62** interne de l'enveloppe **61** cylindrique qui se trouve, de ce fait, en contact électrique avec l'anode **2.**

Dans un mode de réalisation, lorsque le collecteur **4** de courant présente, avant qu'il ne vienne en contact avec la face **62** interne de l'enveloppe **61** cylindrique, un diamètre initial supérieur au diamètre intérieur de l'enveloppe **61** cylindrique, le procédé de fabrication de la cellule **10** électrique comprend une étape d'insertion de ce collecteur **4** de courant dans l'enveloppe **61** cylindrique de sorte que ce collecteur **4** de courant se plie, lorsqu'il vient en contact avec l'enveloppe **61** cylindrique, en sa périphérie sous l'effet de ce contact pour former le rebord**41**. Pour faciliter cette insertion, la périphérie du collecteur **4** de courant est, de préférence, pré-pliée avec un angle compris entre 20 et 75 degrés, de manière plus préférée entre 45 et 70 degrés ou de manière encore plus préférée égale à 60 degrés. Cette étape de pré-pliage permet, avantageusement, d'obtenir une hauteur homogène du rebord **41** et d'accommoder le guidage du collecteur **4** de courant lors de son insertion dans l'enveloppe **61** cylindrique.

Ensuite, on applique (étape **22)** un cordon **7** de soudure sur la tranche **44** du rebord **41** de sorte à souder le collecteur **4** de courant à la face **62** interne de l'enveloppe **61** cylindrique. Il en résulte, avantageusement, une fixation solide, directe et non-hasardeuse, assurant une liaison mécanique et électrique par soudure du collecteur **4** de courant avec le boîtier **6.** Le cordon **7** de soudure peut être continu ou discontinu sur la tranche **44** du rebord **41.**

Il convient de noter que les étapes usuelles préalables d'enroulage par bobinage de l'empilement **1** cylindrique et de fixation du collecteur **4** de courant à la première feuille d'électrode ou à la deuxième feuille d'électrode ne sont pas représentées ici.

## Revendications

1. Cellule **(10)** électrique comprenant
- un empilement **(1)** cylindrique comportant successivement une première feuille **(2)** d'électrode, un premier séparateur, une deuxième feuille d'électrode de polarité opposée à la première feuille d'électrode et un deuxième séparateur ;
- un boîtier **(6)** comportant une enveloppe **(61)** cylindrique métallique ayant une face **(62)** interne délimitant un logement dans lequel loge l'empilement (1) cylindrique ;
- un collecteur **(4)** de courant connecté à la première ou à la deuxième feuille d'électrode;
la cellule **(10)** électrique étant **caractérisée en ce que** le collecteur **(4)** de courant comprend sur sa périphérie un rebord **(41)** comportant une face **(42)** latérale extérieure destinée à venir en contact avec la face **(62)** interne de l'enveloppe **(61)** cylindrique lorsque l'empilement **(1)** cylindrique est logée dans le boîtier **(6);**
une face **(43)** latérale intérieure opposée à la face **(42)** latérale extérieure;
une tranche **(44)** reliant la face **(42)** latérale extérieure et la face **(43)** latérale intérieure,
la cellule **(10)** comprenant un cordon **(7)** de soudure apposé sur la tranche **(44)** et sur la face **(62)** interne de l'enveloppe (61) cylindrique pour souder le collecteur **(4)** de courant à ladite face interne de l'enveloppe (61) cylindrique, une hauteur totale comprenant l'épaisseur du collecteur (4) de courant et la hauteur du rebord (41), mesurée selon un axe longitudinal de l'enveloppe (61) cylindrique étant au minimum égale à deux fois et demie l'épaisseur du collecteur (4) de courant.

2. Cellule **(10)** électrique selon la revendication précédente, **caractérisée en ce que** la tranche **(44)** du rebord **(41)** est sensiblement plane et s'étend sensiblement perpendiculairement à l'axe longitudinal de l'enveloppe **(61)** cylindrique du boîtier **(6).**

3. Cellule **(10)** électrique selon la revendication 1 ou 2, **caractérisée en ce que** le collecteur **(4)** de courant présente une épaisseur comprise entre 0.1 millimètre et 0.6 millimètre.

4. Cellule **(10)** électrique selon la revendication 3, **caractérisée en ce que** l'épaisseur du collecteur **(4)** de courant est sensiblement égale à 0.35 millimètre.

5. Cellule **(10)** électrique selon la revendication 3 ou 4, **caractérisée en ce que** l'épaisseur du collecteur **(4)** de courant est sensiblement homogène sur toute sa surface.

6. Cellule **(10)** électrique selon l'une quelconque des revendications précédentes, **caractérisée en ce que le** rebord **(41)** est présent sur au moins deux parties diamétralement opposées de la périphérie du collecteur **(4)** de courant.

7. Cellule **(10)** électrique selon l'une quelconque des revendications précédentes, **caractérisée en ce que** le collecteur **(4)** de courant présente, avant qu'il ne vienne en contact avec la face **(62)** interne de l'enveloppe **(61)** cylindrique, un diamètre initial supérieur au diamètre intérieur de l'enveloppe **(61)** cylindrique, ce collecteur **(4)** de courant se pliant, lorsqu'il vient en contact avec l'enveloppe **(61)** cylindrique, en sa périphérie sous l'effet de ce contact de sorte à former le rebord **(41).**

8. Cellule **(10)** électrique selon l'une quelconque des revendications précédentes, **caractérisée en ce que** le collecteur **(4)** de courant comprend du cuivre.

9. Cellule **(10)** électrique selon l'une quelconque des revendications précédentes, **caractérisée en ce que** le collecteur **(4)** de courant comprend du nickel.

10. Procédé de fabrication de la cellule **(10)** électrique de l'une quelconque des revendications précédentes, comprenant les étapes suivantes:
- disposition **(21)** de l'empilement **(1)** cylindrique dans le boîtier **(6)** de sorte que la face **(42)** latérale extérieure du rebord **(41)** vient en contact avec la face **(62)** interne de l'enveloppe **(61)** cylindrique;
- application **(22)** d'un cordon **(7)** de soudure sur la tranche **(44)** du rebord **(41)** de sorte à souder le collecteur **(4)** de courant à la face **(62)** interne de l'enveloppe **(61)** cylindrique.

11. Procédé selon la revendication précédente, **caractérisé en ce qu**'il comprend, en outre, une étape d'insertion du collecteur **(4)** de courant dans l'enveloppe **(61)** cylindrique de sorte que ce collecteur **(4)** de courant se plie, lorsqu'il vient en contact avec l'enveloppe **(61)** cylindrique, en sa périphérie sous l'effet de ce contact pour former le rebord **(41),** ce collecteur **(4)** de courant présentant, avant qu'il ne vienne en contact avec la face **(62)** interne de l'enveloppe **(61)** cylindrique, un diamètre initial supérieur au diamètre intérieur de l'enveloppe **(61)** cylindrique.

12. Procédé selon la revendication précédente, **caractérisé en ce qu'**il comprend, en outre, une étape de pré-pliage de la périphérie du collecteur **(4)** de courant avec un angle compris entre 20 et 75 degrés, cette étape de pré-pliage étant préalable à l'étape d'insertion.

13. Procédé selon la revendication précédente, **caractérisé en ce qu**e l'angle est sensiblement égal à 60 degrés.

## Patentansprüche

1. Elektrische Zelle **(10)** umfassend
- einen zylindrischen Stapel **(1)** mit aufeinanderfolgend einem ersten Elektrodenblatt **(2),** einem ersten Separator, einem zweiten Elektrodenblatt mit entgegengesetzter Polarität zum ersten Elektrodenblatt und einem zweiten Separator;
- ein Gehäuse **(6)** mit einer zylindrischen metallischen Hülle **(61)** mit einer inneren Fläche **(62),** die eine Aufnahme begrenzt, in der der zylindrische Stapel (1) untergebracht ist;
- einen Stromkollektor **(4),** der mit dem ersten oder dem zweiten Elektrodenblatt verbunden ist;
die elektrische Zelle **(10), dadurch gekennzeichnet, dass** der Stromkollektor **(4)** an seinem Umfang einen Rand **(41)** aufweist, der eine äußere Seitenfläche **(42)** umfasst, die dazu bestimmt ist, mit der inneren Fläche **(62)** der zylindrischen Hülle **(61)** in Kontakt zu kommen, wenn der zylindrische Stapel **(1)** in dem Gehäuse **(6)** untergebracht ist;
eine innere Seitenfläche **(43),** die der äußeren Seitenfläche **(42)** gegenüberliegt;
eine Stirnfläche **(44),** die die äußere Seitenfläche **(42)** und die innere Seitenfläche **(43)** verbindet,
die Zelle **(10),** umfassend eine Schweißraupe **(7),** die auf die Stirnfläche **(44)** und auf die innere Fläche **(62)** der zylindrischen Hülle (61) aufgebracht ist, um den Stromkollektor **(4)** an die besagte innere Fläche der zylindrischen Hülle (61) zu schweißen, wobei eine Gesamthöhe, die die Dicke des Stromkollektors (4) und die Höhe des Randes (41) umfasst, gemessen entlang einer Längsachse der zylindrischen Hülle (61), mindestens gleich dem Zweieinhalbfachen der Dicke des Stromkollektors (4) ist.

2. Elektrische Zelle **(10)** nach dem vorstehenden Anspruch, **dadurch gekennzeichnet, dass** die Stirnfläche **(44)** des Randes **(41)** im Wesentlichen eben ist und sich im Wesentlichen senkrecht zur Längsachse der zylindrischen Hülle **(61)** des Gehäuses **(6)** erstreckt.

3. Elektrische Zelle **(10)** nach Anspruch 1 oder 2, **dadurch gekennzeichnet, dass** der Stromkollektor **(4)** eine Dicke zwischen 0,1 Millimeter und 0,6 Millimeter aufweist.

4. Elektrische Zelle **(10)** nach Anspruch 3, **dadurch gekennzeichnet, dass** die Dicke des Stromkollektors **(4)** im Wesentlichen gleich 0,35 Millimeter ist.

5. Elektrische Zelle **(10)** nach Anspruch 3 oder 4, **dadurch gekennzeichnet, dass** die Dicke des Stromkollektors **(4)** im Wesentlichen homogen über seine gesamte Oberfläche ist.

6. Elektrische Zelle **(10)** nach einem der vorstehenden Ansprüche, **dadurch gekennzeichnet, dass** der Rand **(41)** an mindestens zwei diametral gegenüberliegenden Bereichen des Umfangs des Stromkollektors **(4)** vorhanden ist.

7. Elektrische Zelle (10) nach einem der vorstehenden Ansprüche, **dadurch gekennzeichnet, dass** der Stromkollektor **(4)** vor seinem Kontakt mit der inneren Fläche **(62)** der zylindrischen Hülle **(61)** einen Anfangsdurchmesser aufweist, der größer ist als der Innendurchmesser der zylindrischen Hülle **(61),** wobei sich dieser Stromkollektor **(4)** beim Kontakt mit der zylindrischen Hülle **(61)** an seinem Umfang unter der Wirkung dieses Kontakts faltet, um den Rand **(41)** zu bilden.

8. Elektrische Zelle **(10)** nach einem der vorstehenden Ansprüche, **dadurch gekennzeichnet, dass** der Stromkollektor **(4)** Kupfer umfasst.

9. Elektrische Zelle **(10)** nach einem der vorstehenden Ansprüche, **dadurch gekennzeichnet, dass** der Stromkollektor **(4)** Nickel umfasst.

10. Verfahren zur Herstellung der elektrischen Zelle **(10)** nach einem der vorstehenden Ansprüche, umfassend die folgenden Schritte:
- Anordnen **(21)** des zylindrischen Stapels **(1)** in dem Gehäuse **(6)** derart, dass die äußere Seitenfläche **(42)** des Randes **(41)** mit der inneren Fläche **(62)** der zylindrischen Hülle **(61)** in Kontakt kommt;
- Aufbringen **(22)** einer Schweißraupe **(7)** auf die Stirnfläche **(44)** des Randes **(41),** um den Stromkollektor **(4)** an die innere Fäche **(62)** der zylindrischen Hülle **(61)** zu schweißen.

11. Verfahren nach dem vorstehenden Anspruch, **dadurch gekennzeichnet, dass** es ferner einen Schritt des Einsetzens des Stromkollektors **(4)** in die zylindrische Hülle **(61)** umfasst, so dass sich dieser Stromkollektor **(4)** beim Kontakt mit der zylindrischen Hülle **(61)** an seinem Umfang unter der Wirkung dieses Kontakts faltet, um den Rand **(41)** zu bilden, wobei dieser Stromkollektor **(4),** bevor er mit der inneren Fläche **(62)** der zylindrischen Hülle **(61)** in Kontakt kommt, einen Anfangsdurchmesser aufweist, der größer ist als der Innendurchmesser der zylindrischen **(61)** Hülle.

12. Verfahren nach dem vorstehenden Anspruch, **dadurch gekennzeichnet, dass** es ferner einen Schritt des Vorfaltens des Umfangs des Stromkollektors **(4)** mit einem Winkel zwischen 20 und 75 Grad umfasst, wobei dieser Schritt des Vorfaltens dem Schritt des Einsetzens vorausgeht.

13. Verfahren nach dem vorstehenden Anspruch, **dadurch gekennzeichnet, dass** der Winkel im Wesentlichen gleich 60 Grad ist.

## Claims

1. Electric cell **(10)** comprising
- a cylindrical stack **(1)** comprising in succession a first electrode sheet **(2),** a first separator, a second electrode sheet having an opposite polarity to the first electrode sheet and a second separator;
- a housing **(6)** comprising a metal cylindrical casing **(61)** having an inner face **(62)** delimiting a cavity in which the cylindrical stack (1) is housed;
- a current collector **(4)** connected to the first or to the second electrode sheet;
the electric cell **(10)** being **characterized in that** the current collector **(4)** comprises on its periphery a rim **(41)** having an outer side face **(42)** which is intended to come into contact with the inner face **(62)** of the cylindrical casing **(61)** when the cylindrical stack **(1)** is housed in the housing **(6);**
an inner side face **(43)** opposite the outer side face **(42);**
an edge surface **(44)** connecting the outer side face **(42)** and the inner side face **(43),**
the cell **(10)** comprising a weld bead **(7)** affixed to the edge surface **(44)** and to the inner face **(62)** of the cylindrical casing (61) to weld the current collector **(4)** to said inner face of the cylindrical casing (61), a total height comprising the thickness of the current collector (4) and the height of the rim (41), measured along a longitudinal axis of the cylindrical casing (61), being at least equal to two and a half times the thickness of the current collector (4).

2. Electric cell **(10)** according to the preceding claim, **characterized in that** the edge surface **(44)** of the rim **(41)** is substantially flat and extends substantially perpendicular to the longitudinal axis of the cylindrical casing **(61)** of the housing **(6).**

3. Electric cell **(10)** according to claim 1 or 2, **characterized in that** the current collector **(4)** has a thickness of between 0.1 millimeters and 0.6 millimeters.

4. Electric cell **(10)** according to claim 3, **characterized in that** the thickness of the current collector **(4)** is substantially equal to 0.35 millimeters.

5. Electric cell **(10)** according to claim 3 or 4, **characterized in that** the thickness of the current collector **(4)** is substantially homogeneous over its entire surface.

6. Electric cell **(10)** according to any one of the preceding claims, **characterized in that** the rim **(41)** is present on at least two diametrically opposed portions of the periphery of the current collector **(4).**

7. Electric cell (10) according to any one of the preceding claims, **characterized in that** the current collector **(4)** has, before it comes into contact with the inner face **(62)** of the cylindrical casing **(61),** an initial diameter greater than the internal diameter of the cylindrical casing **(61),** the current collector **(4)** bending, when it comes into contact with the cylindrical casing **(61),** at its periphery under the effect of this contact so as to form the rim **(41).**

8. Electric cell **(10)** according to any one of the preceding claims, **characterized in that** the current collector **(4)** comprises copper.

9. Electric cell **(10)** according to any one of the preceding claims, **characterized in that** the current collector **(4)** comprises nickel.

10. Method for manufacturing the electric cell **(10)** of any one of the preceding claims, comprising the following steps:
- arranging **(21)** the cylindrical stack **(1)** in the housing **(6)** so that the outer side face **(42)** of the rim **(41)** comes into contact with the inner face **(62)** of the cylindrical casing **(61);**
- applying **(22)** a weld bead **(7)** to the edge surface **(44)** of the rim **(41)** so as to weld the current collector **(4)** to the inner face **(62)** of the cylindrical casing **(61).**

11. Method according to the preceding claim, **characterized in that** it further comprises a step of inserting the current collector **(4)** into the cylindrical casing **(61)** so that the current collector **(4)** bends, when it comes into contact with the cylindrical casing **(61),** at its periphery under the effect of this contact to form the rim **(41),** the current collector **(4)** having, before it comes into contact with the inner face **(62)** of the cylindrical casing **(61),** an initial diameter greater than the internal diameter of the cylindrical casing **(61).**

12. Method according to the preceding claim, **characterized in that** it further comprises a step of pre-bending the periphery of the current collector **(4)** at an angle of between 20 and 75 degrees, this pre-bending step being prior to the insertion step.

13. Method according to the preceding claim, **characterized in that** the angle is substantially equal to 60 degrees.
